# EUROPÄISCHE PATENTSCHRIFT

(11) **EP 3 015 301 B1**
(45) Veröffentlichungstag und Bekanntmachung des Hinweises auf die Patenterteilung: **30.08.2017**
(21) Anmeldenummer: 15191857.0
(22) Anmeldetag: 28.10.2015
(51) Int. Cl.: B60J 7/08

(54) **BEHÄLTER MIT EINER OBEREN BELADEÖFFNUNG UND EINER PLANENABDECKVORRICHTUNG SOWIE WICKELSTÜTZEINRICHTUNG FÜR EINEN SOLCHEN BEHÄLTER**
CONTAINER WITH AN UPPER LOADING OPENING AND TARPAULIN COVERING DEVICE AND WINDING SUPPORT DEVICE FOR A CONTAINER OF THIS KIND
RECIPIENT DOTE D'UNE OUVERTURE DE CHARGEMENT SUPERIEURE ET UN DISPOSITIF DE BACHE ET DISPOSITIF D'EQUERRE DE SUPPORT POUR UN TEL RECIPIENT

(30) Priorität: 31.10.2014 DE 102014222305
(43) Veröffentlichungstag der Anmeldung: 04.05.2016
(73) Patentinhaber: Franz Xaver Meiller Fahrzeug- und Maschinenfabrik-GmbH & Co KG, 80997 München (DE)
(72) Erfinder: Popp, Klaus, 82346 Andechs-Machtlfing (DE)
(74) Vertreter: Tiesmeyer, Johannes

(56) Entgegenhaltungen:
- CA-A- 1 132 168
- US-A- 4 212 492
- US-A- 4 302 043
- US-A- 5 180 203
- US-A- 5 549 347

## Beschreibung

Die Erfindung betrifft einen Behälter mit einer oberen Beladeöffnung und einer Planenabdeckvorrichtung, die eine auf- und abwickelbare Plane aufweist, die in einer die Beladeöffnung freigebenden Öffnungsstellung als Wickel auf einer Wickelstützeinrichtung außen an einer ersten Seite des Behälters abstützbar ist, und die von der ersten Behälterseite zu einer der ersten Behälterseite gegenüberliegenden zweiten Behälterseite über die Beladeöffnung ausbreitbar ist.

Bei den hier betrachteten Behältern handelt es sich insbesondere um Lastentransportbehälter, insbesondere Kippbrücken oder Kippmulden von Lastentransportfahrzeugen. Derartige Behälter mit Planenabdeckvorrichtungen sind in verschiedenen Ausgestaltungen bekannt. Die Planenabdeckvorrichtungen können z.B. dazu dienen, das im Behälter befindliche Ladegut thermisch zu isolieren, vor Niederschlag zu schützen oder am Herausbewegen aus dem Behälter zu hindern. Unter den bekannten Lastentransportbehältern mit Planenabdeckvorrichtung gibt es solche, bei denen die Plane in Längsrichtung des in Draufsicht üblicherweise rechteckförmigen Lastentransportbehälters ausgerollt bzw. eingerollt werden kann. Andere Ausführungsformen sehen vor, dass die Plane quer zur Längsrichtung des Behälters von einer Behälterlateralseite zur anderen Behälterlateralseite ausgerollt bzw. eingerollt werden kann, um den Behälter abzudecken bzw. wieder zu öffnen. Bei den meisten bekannten Behältern mit Planenabdeckvorrichtungen der hier betrachteten Art erfolgt das Freilegen der oberen Beladeöffnung dadurch, dass die Plane aus ihrer die Beladeöffnung überdeckenden Schließstellung heraus auf einen Wickelkern in Form einer Stange oder eines Rohres aufgewickelt wird, wobei sich der Wickelkern mit dem sich darauf bildenden Planenwickel zu einer ersten Seite des Behälters bewegt und schließlich auf hakenförmige Wickelstützeinrichtungen außen nahe des oberen Randes der ersten Behälterseite abgelegt wird. Die Wickelstützeinrichtungen beanspruchen bei behälterlateralseitig abzuwickelnder Plane seitlich außen an dem Behälter Platz und stellen somit eine Verbreiterung des Behälters dar. Dies kann dazu führen, dass zulässige Breitenabmessungen des Behälters überschritten oder auf Nutzvolumen des Behälters verzichtet wird, weil unter Einhaltung zulässiger Breitenabmessungen die Nutzbreite des Behälters um den Überstand der Wickelstützeinrichtungen reduziert ist.

Im üblichen Betrieb des Behälters befindet sich die Plane normalerweise nur dann im aufgewickelten Zustand, um die obere Beladeöffnung des Behälters freizugeben, wenn der Behälter beladen oder ggf. über die obere Beladeöffnung entladen wird oder wenn der Behälter im Leerzustand transportiert wird. Der Be- und Entladevorgang des Behälters erfolgt üblicherweise im Stillstand und nicht im normalen Transportbetrieb im öffentlichen Straßenverkehr. Außerhalb des normalen Transportbetriebs kommt es auf einen die maximal zulässigen Breitenabmessungen des Behälters überschreitenden Überstand der Wickelstützeinrichtungen und des ggf. darauf abgestützten Planenswickels normalerweise nicht an. Es sind Vorschläge gemacht worden, Wickelstützeinrichtungen abnehmbar am Behälter vorzusehen. Bei Behältern, die von Lastentransportfahrzeugen getragen und bewegt werden, könnten dann die Wickelstützeinrichtungen aus ihren Überstandsstellungen am Behälter entfernt sein, wenn das Lastentransportfahrzeug auf öffentlichen Straßen fährt. Aus der US 4 212 492 A ist ein Behälter gemäß dem Oberbegriff des Anspruchs 1 und eine Wickelstützeinrichtung gemäß dem Oberbegriff des Anspruchs 13 bekannt.

Der vorliegenden Erfindung liegt die Aufgabe zugrunde, einen Behälter der Eingangs genannten Art bereitzustellen, der eine einfach aufgebaute, bequem bedienbare und gut funktionierende Wickelstützeinrichtung aufweist, die nur wenig Platz an der ersten Behälterseite beansprucht wenn die Plane in ihrer die Beladeöffnung überdeckenden Schließstellung ist.

Zur Lösung dieser Aufgabe wird ein Behälter mit den Merkmalen des Anspruchs 1 vorgeschlagen, nämlich ein Behälter mit einer oberen Beladeöffnung und einer Planenabdeckvorrichtung, die eine auf- und abwickelbare Plane aufweist, die in einer die Beladeöffnung freigebenden Öffnungsstellung als Wickel auf einer Wickelstützeinrichtung außen an einer ersten Seite des Behälters abstützbar ist, und die von der ersten Behälterseite zu einer der ersten Behälterseite gegenüberliegenden zweiten Behälterseite über die Beladeöffnung ausbreitbar ist, wobei die Wickelstützeinrichtung einen seitlich äußeren Stützarm aufweist, der zwischen einer Platz für den Planenwickel zu dessen Abstützung außen an der ersten Behälterseite bereitstellenden Abspreizstellung und einer der ersten Behälterseite angenäherten Annäherungsstellung an der ersten Behälterseite verstellbar angeordnet und mittels einer Vorspanneinrichtung zu der Annäherungsstellung hin vorgespannt ist.

Der äußere Stützarm kann beim Aufwickeln der Plane von den auf ihn auftreffenden Planenwickel automatisch in die Abspreizstellung verdrängt werden, so dass die Wickelstützeinrichtung den Planenwickel zwischen der ersten Behälterseite und dem äußeren Stützarm aufnehmen und sicher abstützen kann. Dazu weicht der Stützarm nur so weit seitlich nach außen aus, wie es für die Aufnahme des Planenwickels erforderlich ist. Die Wickelstützeinrichtung ist vorzugsweise so gestaltet, dass die Vorspanneinrichtung den Stützarm auch bei in Abstützstellung auf der Wickelstützeinrichtung befindlichem Planenwickel in Richtung auf den Behälter belastet und somit dafür sorgt, dass kein unnötig großer seitlicher Überstand der Wickelstützeinrichtung bei Aufnahme des Planenwickels entsteht und dass ferner der äußere Stützarm eine Klemmwirkung auf den Planenwickel ausübt, die der Sicherung des Planenwickels an der Wickelstützeinrichtung zugute kommt.

Beim Abwickeln der Plane und somit beim Entfernen des Planenwickels aus der Wickelstützvorrichtung sorgt die Vorspanneinrichtung der Wickelstützeinrichtung dafür, dass der Stützarm automatisch in seine Annäherungsstellung am Behälter überführt wird. Je nach Ausführungsform der Erfindung kann sich der Stützarm dann eng an die Außenfläche des Behälters anschmiegen oder gar in etwaigen seitlichen Ausnehmungen der ersten Behälterseite weitgehend verschwinden.

Die Wickelstützeinrichtung kann sehr einfach realisiert werden und funktioniert zuverlässig in der Weise automatisch, dass abgesehen von der Beaufschlagung des Stützarms durch den Planenwickel beim Aufwickeln der Plane und dem Entfernen des Planenwickels vom Stützarm beim Abwickeln der Plane keine weiteren Eingriffe zum Verstellen des Stützarms in die jeweils gewünschte Stellung erforderlich sind. Die Wickelstützeinrichtung nimmt automatisch ihre sehr platzsparende Annäherungsstellung ein, wenn die Plane zur Abdeckung des Behälters abgewickelt wird. Diese schon an sich sehr vorteilhafte Eigenschaft ist insbesondere bei Lastentransportbehältern von Lastentransportfahrzeugen, etwa Kippbrücken von Kipperfahrzeugen bedeutsam, bei denen die Plane von Behälterlateralseite zu Behälterlateralseite wickelbar ist. In ihrer platzsparenden Annäherungsstellung bildet die Wickelstützeinrichtung keinen nennenswerten seitlichen Überstand, der bei der Ausnutzung maximal zulässiger Breitenabmessungen des Behälters kritisch oder sogar unzulässig sein könnte, wenn das Lastentransportfahrzeug auf öffentlichen Straßen fährt. Bei Lastentransportfahrzeugen, bei denen die maximal zulässige Behälterbreite für optimal großes Behälternutzvolumen ausgenutzt ist, wäre dafür Sorge zu tragen, dass das Lastentransportfahrzeug mit nicht auf der seitlichen Wickelstützeinrichtung abgelegter Plane, also vorzugsweise nur mit abgewickelter Plane und somit durch die Plane geschlossener Beladeöffnung auf öffentlichen Straßen bewegt wird.

Gemäß einer bevorzugten Ausführungsform der Erfindung ist der seitlich äußere Stützarm schwenkbeweglich um eine normalerweise horizontale und längs der ersten Seitenwand verlaufende Schwenkachse zwischen der Abspreizstellung und der Annäherungsstellung an der ersten Behälterseite gelagert, wobei die Vorspanneinrichtung eine den Stützarm zur Annäherungsstellung hin belastende Feder aufweist. Eine solche Konstruktion ist sehr einfach realisierbar und ermöglicht auf zuverlässige Weise das Verdrängen des Stützarms zur Abspreizstellung durch den Planenwickel und das selbsttägige Rückführen des Stützarms in die Annäherungsstellung nach Entfernen des Planenwickels.

Ebenso bevorzugt ist eine Ausführungsform der Erfindung, gemäß welcher zwischen dem Stützarm und einem behälterseitig angeordneten Befestigungsmittel der Wickelstützeinrichtung ein Band vorgesehen ist, das beim Übergang des Stützarms in die Abspreizstellung eine Straffung erfährt und den Stützarm an einer Spreizbewegung über eine maximale Abspreizstellung hinaus hindert. Das Band dient vorzugsweise nicht nur zur Begrenzung der Abspreizbewegung des Stützarms, sondern auch als Unterlage für den Planenwickel in der Wickelstützeinrichtung. Dabei kann es eine Art U-Mulde unter dem Gewicht des Planenwickels bilden, die zusätzlich zur gesicherten Aufnahme des Planenwickels in der Wickelstützeinrichtung beiträgt. Das auf einfachste Weise vorzusehende und überdies sehr kostengünstige Band kann somit eine Doppelfunktion erfüllen, die zusätzlich zu der einfachen und zuverlässigen Funktionsweise der Wickelstützeinrichtung beiträgt. Als Band kommt insbesondere ein Gurtband in Frage, welches mit guten mechanischen Eigenschaften ausgestattet preisgünstig am Markt verfügbar ist. Außerdem kann ein solches einfach montierbares flaches Gurtband den Bewegungen des Stützarmes zwischen den genannten Stützarmstellungen quasi widerstandslos folgen, ohne nennenswerten Platz zu beanspruchen.

Eine Weiterbildung der Erfindung sieht vor, dass der Stützarm ein abgewinkeltes Plattenelement ist, welches einen oberen Schenkel mit einem freien oberen Ende - und einen unteren Schenkel mit einem gelenkig an einem behälterseitigen Befestigungsmittel der Wickelstützeinrichtung fixierten unteren Ende aufweist. Ein solches Plattenelement ist preiswert und platzsparend herstellbar.

Die vorliegende Erfindung richtet sich mit einem besonderen Augenmerk auf solche Behälter, die in Draufsicht eine rechteckige Form aufweisen, wobei die erste Behälterseite sowie die zweite Behälterseite die Längsseiten sind.

Dies ist ein häufiger Fall bei Lastentransportbehältern von Lastentransportfahrzeugen. Die die Lateralseiten bildenden Behälterlängsseiten erstrecken sich dabei in Fahrzeuglängsrichtung. Die Plane ist dann von einer Behälterlängsseite zu der gegenüberliegenden Behälterlängsseite über die Beladeöffnung hinweg abwickelbar.

Vorzugsweise weist die Planenabdeckvorrichtung einen Wickelkern auf, wobei die Plane durch Drehen des Wickelkerns darauf aufwickelbar bzw. davon abwickelbar ist. Im aufgewickelten Zustand ist die Plane dann mit dem Wickelkern auf der Wickelstützeinrichtung abstützbar.

In den meisten Fällen wird ein Behälter nach der Erfindung mehrere auf gleicher Höhe angeordnete und längs der ersten Behälterseite verteilte Wickelstützeinrichtungen der hier betrachteten Art aufweisen. Diese Wickelstützeinrichtungen sind vorzugsweise nahe dem oberen Ende der ersten Behälterseite vorgesehen, wenngleich auch niedriger angebaute Wickelstützeinrichtungen bei entsprechender Gestaltung der Planenabdeckvorrichtung realisiert sein könnten.

Gegenstand der Erfindung ist auch eine Wickelstützeinrichtung mit den Merkmalen des Anspruchs 13, wobei die Wickelstützeinrichtung Befestigungsmittel zur Befestigung am Behälter und einen äußeren Stützarm aufweist, der zwischen einer Abspreizstellung zur Vergrößerung des Abstands zwischen den Befestigungsmitteln und dem Stützarm - und einer den Befestigungsmitteln angenäherten Annäherungsstellung verstellbar und mittels einer Vorspanneinrichtung zu der Annäherungsstellung hin vorgespannt ist.

Ein Behälter kann mit einer oder mehreren Wickelstützeinrichtungen nach der Erfindung nachgerüstet oder erstausgerüstet werden.

Gegenstand der Erfindung ist ferner ein Lastentransportfahrzeug mit einem Behälter nach einem der Ansprüche 1 - 12, wobei es sich bei diesem Behäl ter vorzugsweise um eine Kippbrücke, insbesondere Muldenkippbrücke handelt.

Die Erfindung wird nachstehend unter Bezugnahme auf die Figuren näher erläutert.
- Figur 1a: zeigt als Ausführungsbeispiel der Erfindung einen Kippmuldenbehälter mit geöffneter oberer Beladeöffnung in perspektivischer Darstellung.
- Figur 1b: zeigt den Kippmuldenbehälter aus Figur 1 a mit geschlossener oberer Beladeöffnung.
- Figur 2a: zeigt in vergrößerter Darstellung ein Detail A aus Figur 1 a.
- Figur 2b: zeigt in vergrößerter Darstellung ein Detail B aus Figur 1 b.
- Figur 3: zeigt eine erfindungsgemäße Wickelstützvorrichtung isoliert und in perspektivischer Darstellung.
- Figur 4: zeigt die Wickestützvorrichtung aus Figur 3 in einer Seitenansicht, wobei der Stützarm in seiner maximalen Abspreizstellung (mit durchgezogenen Linien) und in seiner Annäherungsstellung (mit gestrichelten Linien) dargestellt ist.
- Figur 5: zeigt die Wickelstützeinrichtung in einer Ansicht gemäß Figur 4, jedoch mit darauf aufliegendem Planenwickel (schematisch dargestellt).

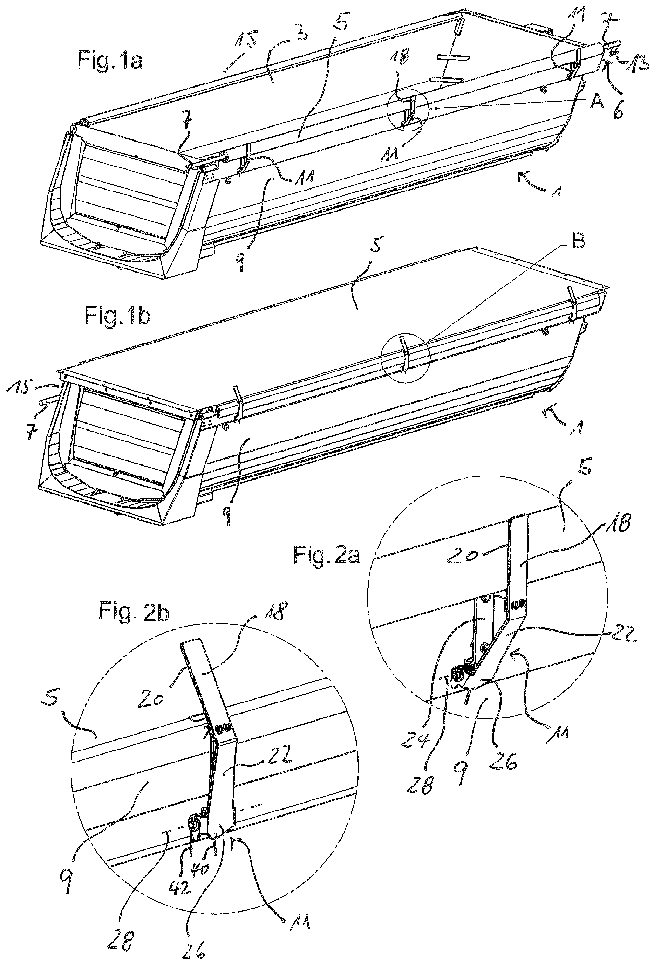

Der Behälter 1 in Figur 1a und Figur 1b hat eine obere Beladeöffnung 3, die in Figur 1a offenliegt und in Figur 1b mittels der Plane 5 einer Planenabdeckvorrichtung 6 geschlossen ist. Die Plane 5 hat einen im Wesentlichen rechteckigen Zuschnitt in Anpassung an die abzudeckende obere Beladeöffnung 3.

In Figur 1a ist die Plane 5 im Wesentlichen vollständig auf einen Wickelkern 7 der Planenabdeckvorrichtung 6 aufgewickelt und befindet sich am oberen Ende einer ersten Seite 9 des Behälters 1. Der Wickel aus Wickelkern 7 und darauf aufgewickelter Plane 5 stützt sich in Figur 1a an drei Wickestützvorrichtungen 11 ab und ist somit an dem Behälter 1 gesichert.

Im Beispielsfall sind im oberen Bereich der ersten Behälterseite 9 die drei Wickelstützvorrichtungen 11 auf gleicher Höhe mit dem Behälter 1 verschraubt, wobei sich jeweils eine Wickelstützvorrichtung 11 nahe dem vorderen Ende und nahe dem hinteren Ende der ersten Behälterseite 9 befindet und eine Wickelstützvorrichtung in etwa mittig dazwischen angeordnet ist.

Die Plane 5 ist einerseits oben an der ersten Seite 9 des Behälters 1 - und andererseits an dem Wickelkern 7 fixiert. Die Planenfixierung an dem Wickelkern 7 ist so ausgeführt, dass der Wickelkern 7 bei seiner Drehung ohne wesentlichen Schlupf die Plane 5 wickelt. Zum Drehen des Wickelkerns 7 ist eine Kurbel 13 vorgesehen, die lösbar auf das axial vordere Ende des Wickelkerns 7 aufsetckbar ist und im aufgesteckten Zustand drehfest mit dem Wickelkern 7 verbunden ist.

Die Plane 5 kann durch Drehen und gegebenenfalls Anheben des Wickelkerns 7 mittels der Kurbel 13 aus ihrer Wickelabstützstellung gemäß Fig. 1a herausbewegt und dann über die obere Beladeöffnung 3 ausgebreitet werden. Der Wickelkern 7 kann dann auf der der ersten Behälterseite 9 gegenüberliegenden Behälterseite 15 mit einer (nicht gezeigten) Planenspannvorrichtung in Eingriff gebracht werden, um die Plane 5 in ihrer Schließstellung gemäß Fig. 1b zu spannen.

Bei dem Behälter 1 handelt es sich im gezeigten Ausführungsbeispiel um einen Kippmuldenbehälter für ein Kipperfahrzeug, wobei die Plane 5 von einer Lateralseite 9 zur anderen Lateralseite 15 des Behälters 1 abwickelbar bzw. aufwickelbar ist.

Gemäß der vorliegenden Erfindung ist das Hauptaugenmerk auf die Wickelstützeinrichtung gerichtet. Die folgende Beschreibung befasst sich daher primär mit einem bevorzugten Ausführungsbeispiel 11 der Wickelstützeinrichtung.

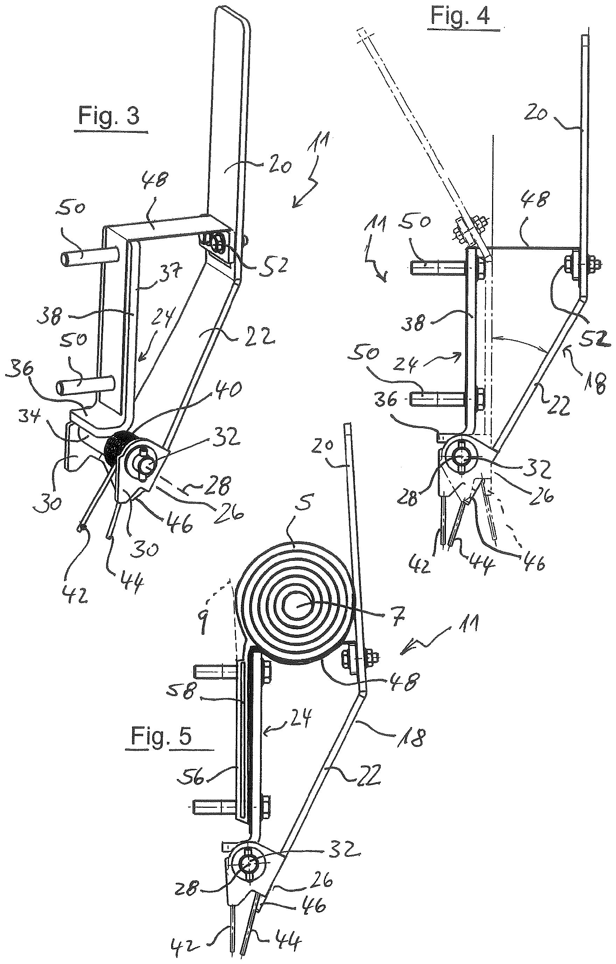

Die Wickelstützeinrichtung 11 ist in den Figuren 2a, 2b und 3 bis 5 detailliert zu erkennen. Sie umfasst einen seitlich äußeren Stützarm 18 der in Fig. 1 b und Fig. 2b in einer der ersten Behälterseite 9 angenäherten Annäherungsstellung gezeigt ist. In Fig. 4 ist der Stützarm 18 mit gestrichelten Linien in der Annäherungsstellung dargestellt. In dieser Annäherungsstellung liegt der Stützarm 18 eng an der ersten Seitenwand 9 des Behälters 1 an und kragt geringfügig mit einem oberen Schenkel 20 über den oberen Rand der ersten Behälterseite 9 hinweg zum Behälterinneren hin ab. Die Wickelstützeinrichtung 11 nimmt auf diese Weise behälteraußenseitig sehr wenig Platz in Anspruch.

Der Stützarm 18 ist ein abgewinkeltes Plattenelement, welches z.B. aus Metall oder aus Kunststoff bestehen kann und den oberen Schenkel 20 mit einem freien oberen Ende- und einen unteren Schenkel 22 mit einem gelenkig an dem behälterseitigen Befestigungsmittel 24 der Wickelstützeinrichtung 11 befestigten unteren Ende 26 aufweist.

Der Stützarm 18 ist zwischen der Annäherungsstellung und einer in den Figuren 3 und 4 erkennbaren maximalen Abspreizstellung um eine Schwenkachse 28 schwenkbar an dem behälterseitigen Befestigungsmittel 24 befestigt. Hierzu weist der Stützarm 18 am unteren Ende 26 seines Schenkels 22 zwei abgekantete Wangen 30 auf, die von einem Lagerstift 32 durchsetzt sind, so dass der Stützarm 18 an diesem Lagerstift 32 schwenkbeweglich um dessen Achse 28 gelagert ist. Die Schwenkachse 28 erstreckt sich in der Montageanordnung der Wickelstützeinrichtung 11 am Behälter 1 horizontal längs des oberen Endes der ersten Behälterseite 9 in Behälterlängsrichtung, wenn der Behälter 1 in seiner unverkippten Horizontallage ist.

Der Lagerstift 32 durchsetzt auch eine Hülse 34, die sich längs zwischen den Wangen 30 des Stützarmes 18 erstreckt und fest mit dem unteren Schenkel 36 des L-förmigen Teils 38 des behälterseitigen Befestigungmittels 24 verbunden ist. Auf der Hülse 34 ist eine Drehfeder oder Schenkelfeder 40 vorgesehen, die eine Vorspanneinrichtung darstellt, um den Stützarm 18 zu seiner Annäherungsstellung federnd vorzuspannen.

Hierzu stützt sich die Feder 40 mit einem ihrer Schenkel 42 außen an der ersten Behälterseite 9 ab, wohingegen der andere Federschenkel 44 an einen unterhalb der Schwenkachse 28 liegenden Hebelarm 46 des Stützarmes 18 angreift, um den oberhalb der Schwenkachse 28 liegenden Teil der Stützarmes 18 in Richtung zur ersten Behälterseite 9 hin vorzuspannen.

Ein Gurtband 48 ist einerseits an dem behälterseitigen Befestigungsmittel 24 und andererseits an dem Stützarm 18 mittels Schrauben 50 bzw. 52 befestigt. Es ist gespannt, wenn der Stützarm 18 in seiner maximalen Abspreizstellung gemäß Figur 3 und Figur 4 ist und dient somit zur Begrenzung der Abspreizbewegung des Stützarmes 18. Die Schrauben 50 durchsetzen das Gurtband 48 im Bereich des oberen Schenkels 37 des L-förmigen Teils 38 des behälterseitigen Befestigungsmittels 24. Das Gurtband 48 erstreckt sich über den oberen Rand dieses Schenkel 37 hinweg zu dem Stützarm 18 und ist daran mit Abstand von dessen oberen Ende befestigt.

Wird nun die Plane 5 der Planenabdeckvorrichtung 6 aus der Schließstellung gemäß Fig. 1b in die Wickelabstützstellung gemäß Fig. 1 a überführt und dabei auf den Wickelkern 7 aufgewickelt, so trifft sie schließlich auf den oberen Schenkel 20 des Stützarmes 18, wobei sie dann den Stützarm 18 gegen die Vorspannkraft der Feder 40 aus der Annäherungsstellung in Richtung zur maximalen Abspreizstellung verdrängen kann. Dabei kommt der entstandene Planenwickel mitsamt Wickelkern 7 zwischen dem oberen Schenkel 20 des Stützarmes 18 und dem oberen Rand der Behälterseite 9 auf dem Gurtband 48 zu liegen, wie dies in Fig. 5 angedeutet ist. Bei Ablage des Wickels auf dem Gurtband 48 kann letzteres unter dem Gewicht des Wickels um einen geringen Betrag nach unten hin durchgebogen werden, so dass es sich um den unteren Bereich des Wickels herum an diesen anschmiegt. Dabei übt das Gurtband 48 eine den Stützarm 18 in Richtung der ersten Behälterseite 9 drängende Zugkraft auf den Stützarm 18 aus, die die Vorspannkraft der Feder 40 noch unterstützt. Dabei entsteht eine Klemmwirkung auf den Planenwickel, die zur gesicherten Ablage des Planenwickels an der Wickelstützeinrichtung 11 beiträgt.

Die Funktion der Wickelstützeinrichtung 11 wurde vorstehend überwiegend nur für eines ihrer Exemplare beschrieben. Diese Beschreibung trifft im gleichen Maße auch auf die weiteren am Behälter 1 vorgesehenen gleichartigen Wickelstützeinrichtungen 11 zu.

Die Schrauben 50, welche das Gurtband 48 an dem behälterseitigen Befestigungsmittel 24 halten dienen auch zur Verschraubung der Wickelstützeinrichtung 11 mit dem Behälter 1. Dabei durchsetzen sie eine in einer Schlaufe 56 der Plane 5 aufgenommene Planenhalteleiste 58, um auf diese Weise auch die Plane 5 einseitig am oberen Rand außen an der ersten Behälterseite 9 zu fixieren.

## Patentansprüche

1. Behälter mit einer oberen Beladeöffnung (3) und einer Planenabdeckvorrichtung (6), die eine auf- und abwickelbare Plane (5) aufweist, die in einer die Beladeöffnung (3) freigebenden Öffnungsstellung als Wickel auf einer Wickelstützeinrichtung (11) außen an einer ersten Seite (9) des Behälters abstützbar ist, und die von der ersten Behälterseite (9) zu einer der ersten Behälterseite (9) gegenüberliegenden zweiten Behälterseite (15) über die Beladeöffnung (3) ausbreitbar ist,
wobei die Wickelstützeinrichtung (11) einen seitlich äußeren Stützarm (18) aufweist
**dadurch gekennzeichnet,**
**dass** der äußere Stützarm (18) zwischen einer Platz für den Planenwickel zu dessen Abstützung außen an der ersten Behälterseite (9) bereitstellenden Abspreizstellung und einer der ersten Behälterseite angenäherten Annäherungsstellung an der ersten Behälterseite (9) verstellbar angeordnet und mittels einer Vorspanneinrichtung (40) zu der Annäherungsstellung hin vorgespannt ist.

2. Behälter nach Anspruch 1, **dadurch gekennzeichnet, dass** er ein Lastentransportbehälter, insbesondere eine Kippbrücke (1), eines Lastentransportfahrzeugs ist.

3. Behälter nach Anspruch 1 oder 2,
**dadurch gekennzeichnet, dass** der seitlich äußere Stützarm (18) schwenkbeweglich um eine normalerweise horizontale und längs der ersten Seitenwand (9) verlaufende Schwenkachse (28) zwischen der Abspreizstellung und der Annäherungsstellung an der ersten Behälterseite (9) gelagert ist und dass die Vorspanneinrichtung eine den Stützarm (18) zur Annäherungsstellung hin belastende Feder (40) aufweist.

4. Behälter nach einem der vorhergehenden Ansprüche, **dadurch gekennzeichnet, dass** zwischen dem Stützarm (18) und einem behälterseitig angeordneten Befestigungsmittel (24) der Wickelstützeinrichtung (11) ein Band (48) vorgesehen ist, das beim Übergang des Stützarms (18) in die Abspreizstellung eine Straffung erfährt und den Stützarm (18) an einer Spreizbewegung über eine maximale Abspreizstellung hinaus hindert.

5. Behälter nach Anspruch 4, **dadurch gekennzeichnet, dass** das Band (48) unterhalb des oberen Endes des Stützarmes (18) an diesem angeordnet ist und als Unterlage für den auf der Wickelstützeinrichtung (11) abzustützenden Planenwickel dient.

6. Behälter nach Anspruch 4 oder 5, **dadurch gekennzeichnet, dass** das Band (48) ein flaches Gurtband ist.

7. Behälter nach Anspruch 3 oder einem darauf rückbezogenen Anspruch, **dadurch gekennzeichnet, dass** der Stützarm (18) ein abgewinkeltes Plattenelement ist, welches einen oberen Schenkel (20) mit einem freien oberen Ende- und einen unteren Schenkel (22) mit einem gelenkig an einem behälterseitigen Befestigungsmittel (24) der Wickelstützeinrichtung (11) befestigten unteren Ende (26) aufweist.

8. Behälter nach Anspruch 3 oder einem darauf rückbezogenen Anspruch, **dadurch gekennzeichnet, dass** er eine in Draufsicht rechteckige Form aufweist und die erste Behälterseite (9) sowie die zweite Behälterseite (15) die Längsseiten sind.

9. Behälter nach einem der vorhergehenden Ansprüche, **dadurch gekennzeichnet, dass** die Planenabdeckvorrichtung (6) einen Wickelkern (7) aufweist, und dass die Plane (5) durch Drehen des Wickelkerns (7) darauf aufwickelbar bzw. davon abwickelbar ist, wobei die Plane (5) im aufgewickelten Zustand zusammen mit dem Wickelkern (7) auf der Wickelstützeinrichtung (11) abstützbar ist.

10. Behälter nach einem der vorhergehenden Ansprüche, **dadurch gekennzeichnet, dass** der Stützarm (18) so gelagert ist, dass er beim Aufwickeln der Plane (5) durch den sich annähernden Wickel in die Abspreizstellung unter Überwindung der Vorspannkraft der Vorspanneinrichtung (40) verdrängbar ist.

11. Behälter nach einem der vorhergehenden Ansprüche, **dadurch gekennzeichnet, dass** zusätzlich zu der Wickelstützeinrichtung (11) weitere dazu gleiche Wickelstützeinrichtungen (11) längs der ersten Behälterseite (9) verteilt vorgesehen sind.

12. Behälter nach einem der vorhergehenden Ansprüche, **dadurch gekennzeichnet, dass** die Wickelstützeinrichtung (11) nahe dem oberen Ende der ersten Behälterseite (9) vorgesehen ist.

13. Wickelstützeinrichtung für einen Behälter (1) mit einer oberen Beladeöffnung (3) und einer Planenabdeckvorrichtung (6), die eine auf- und abwickelbare Plane (5) aufweist, die in einer die Beladeöffnung (3) freigebenden Öffnungsstellung als Wickel auf der am Behälter (1) befestigten Wickelstützeinrichtung (11) außen an einer ersten Seite (9) des Behälters abstützbar ist, und die von der ersten Behälterseite (9) zu einer der ersten Behälterseite (9) gegenüberliegenden zweiten Behälterseite (15) über die Beladeöffnung (3) ausbreitbar ist, wobei der Behälter (1) bevorzugt ein Lastentransportbehälter, insbesondere eine Kippbrücke (1), eines Lastentransportfahrzeugs ist, wobei der Behälter (1) bevorzugt eine in Draufsicht rechteckige Form aufweist und die erste Behälterseite (9) sowie die zweite Behälterseite (15) die Längsseiten sind, wobei bevorzugt die Planenabdeckvorrichtung (6) einen Wickelkern (7) aufweist, die Plane (5) durch Drehen des Wickelkerns (7) darauf aufwickelbar bzw. davon abwickelbar ist und die Plane (5) im aufgewickelten Zustand zusammen mit dem Wickelkern (7) auf der Wickelstützeinrichtung (11) abstützbar ist,
wobei die Wickelstützeinrichtung (11) Befestigungsmittel (24) zur Befestigung am Behälter (1) und einen äußeren Stützarm (18) umfasst, dadurch gekennzeichner, dass der äußere Stützarm (18) zwischen einer Abspreizstellung zur Vergrößerung des Abstands zwischen den Befestigungsmitteln (24) und dem Stützarm (18) - und einer den Befestigungsmitteln (24) angenäherten Annäherungsstellung verstellbar und mittels einer Vorspanneinrichtung (40) zu der Annäherungsstellung hin vorgespannt ist.

14. Wickelstützeinrichtung nach Anspruch 13, **dadurch gekennzeichnet, dass** der seitlich äußere Stützarm (18) schwenkbeweglich um eine Schwenkachse (28) zwischen der Abspreizstellung und der Annäherungsstellung an dem Befestigungsmittel (24) gelagert ist und dass die Vorspanneinrichtung eine den Stützarm zur Annäherungsstellung hin belastende Feder (40) aufweist.

15. Wickelstützeinrichtung nach Anspruch 13 oder 14, **dadurch gekennzeichnet, dass** zwischen dem Stützarm (18) und dem Befestigungsmittel (24) ein Band (48) vorgesehen ist, das beim Übergang des Stützarms (18) in die Abspreizstellung eine Straffung erfährt und den Stützarm (18) an einer Spreizbewegung über eine maximale Abspreizstellung hinaus hindert, wobei das Band (48) bevorzugt als Unterlage für den auf der Wickelstützeinrichtung abzustützenden Planenwickel dienen kann.

16. Wickelstützeinrichtung nach einem der Ansprüche 13 bis 15, **dadurch gekennzeichnet, dass** das Band unterhalb eines oberen Endes des Stützarmes an diesem angeordnet ist und als Unterlage für den auf der Wickelstützeinrichtung abzustützenden Planenwickel dient.

17. Wickelstützeinrichtung nach einem der Ansprüche 13 - 16, **dadurch gekennzeichnet, dass** der Stützarm ein abgewinkeltes Plattenelement ist, welches einen oberen Schenkel mit einem freien oberen Ende- und einen unteren Schenkel mit einem an dem Befestigungsmittel schwenkbeweglich angeordneten unteren Ende aufweist.

18. Lastentransportfahrzeug mit einem Behälter (1) nach einem der Ansprüche 1 bis 12.

## Claims

1. Container comprising an upper loading opening (3) and a tarpaulin covering device (6) that comprises a tarpaulin (5) which can be rolled up and unrolled, which can be supported on the outside on a first side (9) of the container on a roll support apparatus (11) in the form of a roll in an opened position that uncovers the loading opening (3), and which can be opened out over the loading opening (3) from the first container side (9) to a second container side (15) opposite the first container side (9),
the roll support apparatus (11) comprising a laterally outer support arm (18),
**characterised in that**
the outer support arm (18) is arranged so as to be adjustable on the first container side (9) between an extended position that provides space for the tarpaulin roll such that it is supported on the outside on the first container side (9) and a proximate position that is closer to the first container side, and said arm is pretensioned towards the proximate position by means of a pretensioning apparatus (40).

2. Container according to claim 1, **characterised in that** it is a load transport container, in particular a tipper body (1), of a load transport vehicle.

3. Container according to either claim 1 or claim 2, **characterised in that** the laterally outer support arm (18) is mounted on the first container side (9) so as to pivot about a pivot axis (28), which is normally horizontal and extends along the first side wall (9), between the extended position and the proximate position, and **in that** the pretensioning apparatus comprises a spring (40) that loads the support arm (18) towards the proximate position.

4. Container according to any of the preceding claims, **characterised in that**, between the support arm (18) and a container-side fastening means (24) of the roll support apparatus (11), a strap (48) is provided which is tightened when the support arm (18) transitions into the extended position and prevents the support arm (18) from extending beyond a maximum extended position.

5. Container according to claim 4, **characterised in that** the strap (48) is arranged on the support arm (18) below the upper end thereof, and is used as a supporting surface for the tarpaulin roll to be supported on the roll support apparatus (11).

6. Container according to either claim 4 or claim 5, **characterised in that** the strap (48) is a planar belt strap.

7. Container according to claim 3 or to a claim dependent thereon, **characterised in that** the support arm (18) is an angled plate element comprising an upper leg (20) having a free upper end and a lower leg (22) having a lower end (26) that is fastened in an articulated manner to a container-side fastening means (24) of the roll support apparatus (11).

8. Container according to claim 3 or to a claim dependent thereon, **characterised in that** it has a shape that is rectangular in plan view, and the first container side (9) and the second container side (15) are the longitudinal sides.

9. Container according to any of the preceding claims, **characterised in that** the tarpaulin covering device (6) comprises a roll core (7), and **in that** the tarpaulin (5) can be rolled up onto or unrolled from the roll core (7) by rotating said core, it being possible for the tarpaulin (5) to be supported on the roll support apparatus (11) together with the roll core (7) when rolled up.

10. Container according to any of the preceding claims, **characterised in that** the support arm (18) is mounted such that it can be displaced into the extended position, while overcoming the pretensioning force of the pretensioning apparatus (40), by the approaching roll when the tarpaulin (5) is being rolled up.

11. Container according to any of the preceding claims, **characterised in that**, in addition to the roll support apparatus (11), other roll support apparatuses (11) that are identical thereto are distributed along the first container side (9).

12. Container according to any of the preceding claims, **characterised in that** the roll support apparatus (11) is provided close to the upper end of the first container side (9).

13. Roll support apparatus for a container (1) comprising an upper loading opening (3) and a tarpaulin covering device (6) that comprises a tarpaulin (5) which can be rolled up and unrolled, which can be supported on the outside on a first side (9) of the container on the roll support apparatus (11) fastened to the container (1) in the form of a roll in an opened position that uncovers the loading opening (3), and which can be opened out over the loading opening (3) from the first container side (9) to a second container side (15) opposite the first container side (9), the container (1) preferably being a load transport container, in particular a tipper body (1), of a load transport vehicle, the container (1) preferably having a shape that is rectangular in plan view, and the first container side (9) and the second container side (15) being the longitudinal sides, the tarpaulin covering device (6) preferably comprising a roll core (7), it being possible for the tarpaulin (5) to be rolled up onto or unrolled from the roll core (7) by rotating said core, and it being possible for the tarpaulin (5) to be supported on the roll support apparatus (11) together with the roll core (7) when rolled up,
the roll support apparatus (11) comprising fastening means (24) for fastening to the container (1), and comprising an outer support arm (18), **characterised in that** the outer support arm (18) can be adjusted between an extended position for increasing the space between the fastening means (24) and the support arm (18) and a proximate position that is closer to the fastening means (24), and said arm is pretensioned towards the proximate position by means of a pretensioning apparatus (40).

14. Roll support apparatus according to claim 13, **characterised in that** the laterally outer support arm (18) is mounted on the fastening means (24) so as to pivot about a pivot axis (28) between the extended position and the proximate position, and **in that** the pretensioning apparatus comprises a spring (40) that loads the support arm towards the proximate position.

15. Roll support apparatus according to either claim 13 or claim 14, **characterised in that**, between the support arm (18) and the fastening means (24), a strap (48) is provided which is tightened when the support arm (18) transitions into the extended position and prevents the support arm (18) from extending beyond a maximum extended position, it being possible for the strap (48) to be preferably used as a supporting surface for the tarpaulin roll to be supported on the roll support apparatus.

16. Roll support apparatus according to any of claims 13 to 15, **characterised in that** the strap is arranged on the support arm below an upper end thereof, and is used as a supporting surface for the tarpaulin roll to be supported on the roll support apparatus.

17. Roll support apparatus according to any of claims 13 to 16, **characterised in that** the support arm is an angled plate element comprising an upper leg having a free upper end and a lower leg having a lower end that is pivotally arranged on the fastening means.

18. Load transport vehicle comprising a container (1) according to any of claims 1 to 12.

## Revendications

1. Contenant comprenant une ouverture de chargement (3) supérieure et un dispositif de bâche de recouvrement (6), qui présente une bâche (5) pouvant être enroulée et déroulée, laquelle prend appui, dans une position ouverte dégageant l'ouverture de chargement (3), côté extérieur au niveau d'un premier côté (9) du contenant sous la forme d'un enroulement sur un système de support d'enroulement (11) et qui peut être déployée par-dessus l'ouverture de chargement (3) depuis le premier côté de contenant (9) vers un deuxième côté de contenant (15) faisant face au premier côté de contenant (9),
dans lequel le système de support d'enroulement (11) présente un bras de support (18) extérieur latéralement,
**caractérisé en ce**
**que** le bras de support (18) extérieur est disposé au niveau du premier côté de contenant (9) de manière à pouvoir être ajusté entre une position d'écartement faisant de la place pour l'enroulement de bâche aux fins de son appui côté extérieur au niveau du premier côté de contenant et une position de rapprochement rapprochée du premier côté de contenant (9) et est précontraint en direction de la position de rapprochement au moyen d'un système de précontrainte (40).

2. Contenant selon la revendication 1, **caractérisé en ce qu'**il est un contenant de transport de charges, en particulier un pont basculant (1), d'un véhicule de transport de charges.

3. Contenant selon la revendication 1 ou 2,
**caractérisé en ce que** le bras de support (18) extérieur latéralement est monté au niveau du premier côté de contenant (9) de manière mobile par pivotement autour d'un axe de pivotement (28) généralement horizontal et s'étendant le long de la première paroi latérale (9) entre la position d'écartement et la position de rapprochement, et que le système de précontrainte présente un ressort (40) soumettant à une contrainte le bras de support (18) en direction de la position de rapprochement.

4. Contenant selon l'une quelconque des revendications précédentes, **caractérisé en ce qu'**est prévue une bande (48), entre le bras de support (18) et un moyen de fixation (24), disposée côté contenant, du système de support d'enroulement (11), qui subit un raidissement lors du passage du bras de support (18) dans la position d'écartement et empêche le bras de support (18) d'effectuer un déplacement d'écartement sur une position d'écartement maximale.

5. Contenant selon la revendication 4, **caractérisé en ce que** la bande (48) est disposée au niveau du bras de support (18) sous l'extrémité supérieure de ce dernier ou fait office de base pour l'enroulement de bâche à appuyer sur le système de support d'enroulement (11).

6. Contenant selon la revendication 4 ou 5, **caractérisé en ce que** la bande (48) est une sangle plate.

7. Contenant selon la revendication 3 ou selon une revendication s'y rapportant, **caractérisé en ce que** le bras de support (18) est un élément formant une plaque coudée, qui présente une branche (20) supérieure pourvue d'une extrémité supérieure libre et une branche (22) inférieure pourvue d'une extrémité (26) inférieure fixée de manière articulée au niveau d'un moyen de fixation (24) situé côté contenant du système de support d'enroulement (11).

8. Contenant selon la revendication 3 ou selon une revendication s'y rapportant, **caractérisé en ce qu'**il présente une forme rectangulaire dans une vue d'en haut, et le premier côté de contenant (9) ainsi que le deuxième côté de contenant (15) sont les côtés longitudinaux.

9. Contenant selon l'une quelconque des revendications précédentes, **caractérisé en ce que** le dispositif de bâche de recouvrement (6) présente une partie centrale d'enroulement (7), et que la bâche (5) peut être enroulée sur la partie centrale d'enroulement (7) par rotation de cette dernière ou en être déroulée, dans lequel la bâche (5) peut prendre appui, dans l'état enroulé conjointement avec la partie centrale d'enroulement (7), sur le système de support d'enroulement (11).

10. Contenant selon l'une quelconque des revendications précédentes, **caractérisé en ce que** le bras de support (18) est monté de telle sorte qu'il peut être repoussé, lors de l'enroulement de la bâche (5), par l'enroulement se rapprochant, dans la position d'écartement en surmontant la force de précontrainte du système de précontrainte (40).

11. Contenant selon l'une quelconque des revendications précédentes, **caractérisé en ce qu'**en plus du système de support d'enroulement (11), d'autres systèmes de support d'enroulement (11) identiques à ce dernier sont prévus de manière répartie le long du premier côté de contenant (9).

12. Contenant selon l'une quelconque des revendications précédentes, **caractérisé en ce que** le système de support d'enroulement (11) est prévu à proximité de l'extérieur supérieur du premier côté de contenant (9).

13. Système de support d'enroulement pour un contenant (1) comprenant une ouverture de chargement (3) supérieure et un dispositif de bâche de recouvrement (6), qui présente une bâche (5) pouvant être enroulée et déroulée, qui peut prendre appui, dans une position ouverte dégageant l'ouverture de chargement (3), côté extérieur au niveau d'un premier côté (9) du contenant sous la forme d'un enroulement sur le système de support d'enroulement (11) fixé au niveau du contenant (1) et qui peut être déployée par-dessus l'ouverture de chargement (3) depuis le premier côté de contenant (9) en direction d'un deuxième côté de contenant (15) faisant face au premier côté de contenant (9), dans lequel le contenant (1) est de manière préférée un contenant de transport de charges, en particulier un pont basculant (1), d'un véhicule de transport de charges, dans lequel le contenant (1) présente de manière préférée une forme rectangulaire dans une vue d'en haut et le premier côté de contenant (9) ainsi que le deuxième côté de contenant (15) sont les côtés longitudinaux, dans lequel de manière préférée le dispositif de bâche de recouvrement (6) présente une partie centrale d'enroulement (7), la bâche (5) peut être enroulée sur la partie centrale d'enroulement (7) par la rotation de cette dernière et en être déroulée et la bâche (5) peut prendre appui, dans l'état enroulé conjointement avec la partie centrale d'enroulement (7), sur le système de support d'enroulement (11),
dans lequel le système de support d'enroulement (11) comprend des moyens de fixation (24) servant à la fixation au niveau du contenant (1) et un bras de support (18) extérieur, **caractérisé en ce que** le bras de support (18) extérieur peut être ajusté entre une position d'écartement servant à agrandir l'espacement entre les moyens de fixation (24) et le bras de support (18) et une position de rapprochement rapprochée des moyens de fixation (24) et est précontraint en direction de la position de rapprochement au moyen d'un système de précontrainte (40).

14. Système de support d'enroulement selon la revendication 13, **caractérisé en ce que** le bras de support (18) extérieur latéralement est monté au niveau du moyen de fixation (24) de manière mobile par pivotement autour d'un axe de pivotement (28) entre la position d'écartement et la position de rapprochement, et que le système de précontrainte présente un ressort (40) soumettant le bras de support à des contraintes en direction de la position de rapprochement.

15. Système de support d'enroulement selon la revendication 13 ou 14, **caractérisé en ce qu'**est prévue une bande (48), entre le bras de support (18) et le moyen de fixation (24), qui subit un raidissement lors du passage du bras de support (18) dans la position d'écartement et empêche le bras de support (18) d'effectuer un déplacement d'écartement sur une position d'écartement maximale, dans lequel la bande (48) peut faire office de manière préférée de base pour l'enroulement de bâche à appuyer sur le système de support d'enroulement.

16. Système de support d'enroulement selon l'une quelconque des revendications 13 à 15, **caractérisé en ce que** la bande est disposée au niveau du bras de support sous une extrémité supérieure de ce dernier et fait office de base pour l'enroulement de bâche à appuyer sur le système de support d'enroulement.

17. Système de support d'enroulement selon l'une quelconque des revendications 13 - 16, **caractérisé en ce que** le bras de support est un élément formant une plaque coudée, qui présente une branche supérieure pourvue d'une extrémité supérieure libre et une branche inférieure pourvue d'une extrémité inférieure disposée de manière mobile par pivotement au niveau du moyen de fixation.

18. Véhicule de transport de charges comprenant un contenant (1) selon l'une quelconque des revendications 1 à 12.
